# EUROPÄISCHE PATENTSCHRIFT

(11) **EP 4 105 682 B1**
(45) Veröffentlichungstag und Bekanntmachung des Hinweises auf die Patenterteilung: **02.08.2023**
(21) Anmeldenummer: 21180419.0
(22) Anmeldetag: 18.06.2021
(51) Int. Cl.: G01S 7/481, G01S 17/42

(54) **OPTOELEKTRONISCHER SENSOR UND VERFAHREN ZUR ERFASSUNG VON OBJEKTEN**
OPTOELECTRONIC SENSOR AND METHOD FOR DETECTING OBJECTS
CAPTEUR OPTOÉLECTRONIQUE ET PROCÉDÉ DE DÉTECTION DES OBJETS

(43) Veröffentlichungstag der Anmeldung: 21.12.2022
(73) Patentinhaber: SICK AG, 79183 Waldkirch (DE)
(72) Erfinder: Buser, Roger, 79106 Freiburg (DE); Brender, Tamara, 79111 Freiburg (DE); Pfeil, Jonathan, 79227 Schallstadt (DE); Lemke, Florian, 79104 Freiburg (DE)

(56) Entgegenhaltungen:
- DE-T2- 69 132 189
- JP-A- S6 222 037
- US-A1- 2009 122 429
- US-A1- 2017 322 074

## Beschreibung

Die Erfindung betrifft einen optoelektronischer Sensor, insbesondere Laserscanner, und ein Verfahren zur Erfassung von Objekten in einem Überwachungsbereich nach dem Oberbegriff von Anspruch 1 beziehungsweise 15.

Optoelektronische Systeme und besonders Laserscanner eignen sich für Erfassungen und Abstandsmessungen, die einen großen horizontalen Winkelbereich des Messsystems erforderlich machen. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit in einem Phasen- oder Pulsverfahren zusätzlich auf die Entfernung des Objektes von dem Laserscanner geschlossen. Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Die Nachweisempfindlichkeit einfacher Photodioden genügt in vielen Anwendungsfällen nicht. In einer Lawinenphotodiode (APD, Avalanche Photo Diode) löst das einfallende Licht einen kontrollierten Lawinendurchbruch (Avalanche Effect) aus. So werden die von einfallenden Photonen erzeugten Ladungsträger vervielfacht, und es entsteht ein Photostrom, der zu der Lichtempfangsintensität proportional, dabei aber wesentlich größer ist als bei einer einfachen PIN-Diode. Im sogenannten Geiger-Modus ist die Lawinenphotodiode oberhalb der Durchbruchspannung vorgespannt (Bias), so dass bereits ein einziger, durch ein einzelnes Photon freigesetzter Ladungsträger eine Lawine auslösen kann, die dann aufgrund der hohen Feldstärke sämtliche verfügbaren Ladungsträger rekrutiert. Die Lawinenphotodiode zählt somit wie der namensgebende Geigerzähler Einzelereignisse. Lawinenphotodioden im Geiger-Modus werden auch als SPADs (Single-Photon Avalanche Diode, Einzelphotonlawinendiode) und entsprechende Lichtempfänger als Multi-Pixel Photon Counter (MPCC) oder Silizium-Photomultiplier (SiPM) bezeichnet.

In APDs ist das elektronische System stärker temperaturabhängig, so dass eine Nachführung der Hochspannung vorgenommen werden muss. Es gibt mehr inhärente Rauschquellen, sie sind im Verhältnis Fläche zu Bandbreite begrenzt und generell teurer. Das alles spricht für einen Lichtempfänger auf Basis von SPADs oder eines SiPMs. Allerdings löst bei der Einzelphotondetektion nicht nur ein Nutzlichtphoton, sondern auch ein schwaches Störereignis durch Fremdlicht, optisches Übersprechen oder Dunkelrauschen den Lawinendurchbruch aus. Dieses Störereignis trägt dann mit dem gleichen relativ starken Signal zum Messergebnis bei wie das empfangene Nutzlicht und ist davon auch aus dem Signal heraus nicht unterscheidbar. Anschließend bleibt die im Geiger-modus betriebene Lawinenphotodiode für eine Totzeit von ca. 5 bis 100 ns unempfindlich und fällt solange für weitere Messungen aus. Bei APD- oder PIN-Dioden dagegen gibt es die Möglichkeit, einen durch Fremdlicht erzeugten Querstrom elektronisch abzuleiten.

Aus diesen Gründen ist gerade für Einzelphotondetektion eine besonders wirksame Unterdrückung von Fremdlicht gegenüber Nutzlicht anzustreben, wobei diese Maßnahmen Lichtempfängern anderer Technologie ebenso zu Gute kommen. Eine Strategie besteht darin, Fremdlicht erst gar nicht bis zum Lichtempfänger durchdringen zu lassen. Das gelingt über spektrale Trennung mittels optischer Bandpässe, eine Minderung unerwünschter Streu- oder Reflexwege im Sensor und eine gezielte Reduzierung des Akzeptanzwinkels vorzugsweise mittels einer Blende vor dem Lichtempfänger.

Der Akzeptanzwinkel ist proportional zum Quotienten von Feldblendenfläche und Brennweite einer Empfangsoptik. Die Brennweite wiederum ändert sich über den spezifizierten Temperaturbereich des Sensors typischerweise um mehrere Prozentpunkte. Diese Änderung wird üblicherweise zur Toleranzkette hinzuaddiert und vergrößert letzten Endes den Feldblendendurchmesser und somit den Akzeptanzwinkel des Systems. Damit muss aber in Kauf genommen werden, dass mehr Fremdlicht detektiert wird.

Die DE 10 2009 055 988 B3 beschreibt eine Vorrichtung zum optischen Abtasten und Vermessen einer Umgebung, die eine Sammellinse und eine nachgeordnete mehrfache Umlenkung zu einem Lichtempfänger einsetzt. Dabei ist eine Farbkamera auf der optischen Achse der Empfangslinse angeordnet, welche Farbbilder der Umgebung des Laserscanners aufnimmt.

Ein Lidarsensor nach DE 10 2017 209 294 A1 mit einer mehrstrahligen Lichtquelle zum Aussenden von Lichtstrahlen setzt im Empfangsstrahlengang ein Richtungsfilter, ein sammelndes primäres und ein streuendes sekundäres Spiegelelement ein.

In einem Laserscanner nach EP 3 246 729 B1 wird als Optik ein Sammelspiegel verwendet, der die Funktion der Empfangsoptik und Strahlfaltung in sich vereinigt. Eine derartige empfangsseitige Strahlführung wird auch in einer Ausführungsform der US 7 544 945 B2 vorgeschlagen.

Diese Dokumente verfolgen aber keinerlei Ansätze, die temperaturbedingte Brennweitenveränderung einer Empfangsoptik zu kompensieren. Nur die EP 3 246 729 B1 geht auf diesen Aspekt überhaupt ein und meidet eine Empfangslinse und mit ihr deren Temperatureffekt. Das ist ein mögliches Vorgehen, aber eine Empfangslinse hat durchaus ihre Berechtigung und Vorteile, so dass ihre Eliminierung das eigentliche Problem nicht adressiert.

Die EP 3 699 637 B1 befasst sich mit einem Laserscanner, das einen refraktiven Einfluss einer Frontscheibe auf hindurchtretendes Sende- beziehungsweise Empfangslicht kompensiert, unter anderem durch entsprechende Formgebung des Drehspiegels. Die geschilderten Auswirkungen von Temperaturänderungen werden dadurch nicht verringert.

Die EP 3 699 638 B1 beschreibt einen Laserscanner mit einer mitrotierenden Abschirmeinrichtung für das Sendelicht. Der Empfangsstrahlengang wird ganz herkömmlich über einen flachen Drehspiegel und eine Empfangslinse ohne weitere Umlenkungen geführt.

Aus der DE 691 32 189 T2 sind eine Vorrichtung und ein Verfahren zum Vermeiden von Fahrzeug-Zusammenstößen bekannt. Deren Abtast-Entfernungsmesser sendet Lichtpulse über einen beweglichen Abtastspiegel und weitere Spiegel aus.

Die US 2009/0122429 A1 beschreibt ein selbstkorrigierendes optisches Element für optische Systeme mit hoher Temperaturbelastung. Es weist einen Körper auf, der eine reflektierende Oberfläche bildet, sowie einen Korrekturabschnitt an der gegenüberliegenden zweiten Oberfläche. Aufgrund unterschiedlicher thermischer Ausdehnungskoeffizienten ändert sich die Krümmung der reflektierenden Oberfläche mit der Temperatur.

In der JP S62 22037 A wird ein optischer Temperatursensor vorgestellt. Dabei strahlt eine LED Licht auf einen Spiegel, dessen Krümmung sich temperaturabhängig verändert. Dadurch wiederum gelangt mehr oder weniger Licht auf eine Photodiode, deren Pegel somit eine Bestimmung der Temperatur erlaubt.

Es ist daher Aufgabe der Erfindung, eine verbesserte Messung mit einem gattungsgemäßen Sensor zu ermöglichen.

Diese Aufgabe wird durch einen optoelektronischer Sensor, insbesondere Laserscanner, und ein Verfahren zur Erfassung von Objekten in einem Überwachungsbereich nach Anspruch 1 beziehungsweise 15 gelöst. Ein Lichtsender erzeugt Sendelicht und sendet es in den Überwachungsbereich aus. Das Sendelicht wird als remittiertes Sendelicht wieder empfangen, nachdem es zumindest teilweise im Überwachungsbereich von einem Objekt zurückgeworfen wurde. Es entsteht somit Empfangslicht, in dem sich das remittierte Sendelicht mit Fremdlicht überlagert. Solange kein Objekt angetastet wird, bildet nur Fremdlicht das Empfangslicht. Mit Hilfe einer beweglichen Ablenkeinheit wird eine Scanbewegung erzeugt, vorzugsweise eine Drehbewegung, mit der das Sendelicht und das Empfangslicht periodisch in unterschiedliche Ablenkwinkel ausgesandt beziehungsweise aus unterschiedlichen Ablenkwinkeln erfasst wird.

Das jeweilige Empfangssignal wird ausgewertet, um eine optisch erfassbare Information über das Objekt zu gewinnen, wie eine binäre Anwesenheitsinformation, einen Abstand, eine Position oder auch eine Farbe oder ein Remissionsvermögen. Die Steuer- und Auswertungseinheit ist bevorzugt dafür ausgebildet, aus einer Lichtlaufzeit zwischen Aussenden des Sendelichts und Empfangen des Empfangslichts einen Abstand des Objekts zu bestimmen. Damit entsteht ein entfernungsmessender Sensor, und es wird als Messinformation über das Objekt dessen Abstand bestimmt.

Im Strahlengang des Empfangslichts ist ein optisches Umlenkelement angeordnet, insbesondere ein Spiegelelement, mit dem das Empfangslicht umgelenkt wird. Je nach Ausführungsform kann diese Umlenkung an der periodischen Ablenkung beteiligt beziehungsweise selbst die periodische Ablenkung sein, oder es handelt sich um eine zusätzliche Umlenkung, die nicht für die periodische Ablenkung verantwortlich und dieser vorzugsweise nachgeordnet ist.

Die Erfindung geht von dem Grundgedanken aus, mit dem Umlenkelement eine Temperaturkompensation vorzunehmen. Dazu weist das Umlenkelement eine Strahlformung auf, die temperaturabhängig ist. Insbesondere ist das Umlenkelement gekrümmt, und dem Umlenkelement kann somit eine Brennweite zugeordnet werden. Diese Krümmung und damit die Brennweite ändert sich durch gezielte Verformung über einen bekannten Temperaturbereich. Die möglichen Krümmungszustände können einen flachen, nicht gekrümmten Zustand für eine bestimmte Temperatur einschließen. Erfindungsgemäß wird eine gezielte thermische Anpassung erreicht, die zu gewünschten temperaturabhängigen Änderungen von Strahlformungseigenschaften führt. Es sind damit nicht lediglich unvermeidliche Temperatureffekte gemeint, denen jegliche Objekte unterworfen sind. Das würde beispielsweise einen flachen Spiegel nicht zu einem bündelnden oder streuenden Spiegel werden lassen, und jedenfalls wäre die Änderung undefiniert, sie würde zufällig und daher zusätzlich störend und nicht kompensierend wirken.

Die Erfindung hat den Vorteil, dass der Sichtraumwinkel für einen Temperaturgang von beispielsweise 100°C klein bleibt. Durch vorzugsweise passive, alternativ auch aktive Kompensation mittels des Umlenkelements werden thermischen Einflüsse im Empfangsstrahlengang ganz oder teilweise reduziert, etwa die inhärente Änderung der Brennweite der Empfangslinse über die Temperatur. Dadurch werden ein kleiner Lichtfleck, somit eine hohe Ortsauflösung, sowie ein geringer Fremdlichteintrag erreicht. Es muss kein vergrößerter Akzeptanzraumwinkel zum Ausgleich von Temperaturtoleranzen vorgehalten werden. Das verbessert die Bedingungen für den Einsatz von hochempfindlichen Lawinenphotodioden im Geigermodus (SPAD, Single Photon Avalanche Diode, oder SiPM, Silicon Photomultiplier), die durch Fremdlicht fehlausgelöst werden und danach in einer Totzeit für Nutzlicht nicht mehr zur Verfügung stehen. Das robuste Fremdlichtkonzept ist kostengünstig realisierbar und in bestehenden Systemen nachrüstbar.

Das Umlenkelement weist vorzugsweise nur eine einzige Spiegelfläche auf, wobei mehrere separate Spiegelelemente in derselben Ebene mit gemeinsamer Wirkung eines Spiegels, insbesondere sehr nahe beieinanderliegende Spiegelelemente, alternativ denkbar sind. Eine weitere denkbare Variante nutzt die Vorder- und Hinterseite eines Spiegels mit einem gegenseitigen Abstand von beispielsweise 1-2 mm.

Der Sensor weist eine Empfangsoptik, insbesondere mit mindestens einem refraktiven Element oder einer Empfangslinse, zum Bündeln des Empfangslichts auf den Lichtempfänger auf. Die Empfangsoptik führt das Empfangslicht vorzugsweise unter Bündelung oder Fokussierung des Empfangslichts auf den Lichtempfänger. Aus Gründen eines einfachen Aufbaus ist besonders bevorzugt nur eine einzige Empfangslinse eingesetzt. Die Empfangsoptik beziehungsweise Empfangslinse ist vorzugsweise aus Kunststoff hergestellt. Das ermöglicht eine günstige Herstellung und beliebige Formgebung einschließlich Zusatzfunktionen wie Fixierungen und dergleichen. Eine alternative Glaslinse hat einen robusteren Temperaturgang, reduziert aber den Gestaltungsfreiraum, und besonders bei großen asphärischen Linsen ist der Preis deutlich höher.

Die temperaturabhängigen Strahlformungseigenschaften des Umlenkelements wirken einer temperaturabhängigen Veränderung der Strahlformungseigenschaften der Empfangsoptik kompensatorisch entgegen. Bevorzugt erfahren das Umlenkelement und die Empfangsoptik unter Temperaturveränderung eine zueinander entgegengesetzte Brennweitenänderung. Das Umlenkelement hat mit anderen Worten einen zu der Empfangsoptik inversen Temperaturgang. Es sorgt für eine Veränderung der Strahlformungseigenschaften, insbesondere der Brennweite, in einer Gegenrichtung zu derjenigen der Empfangsoptik. Dies hat zum Ziel, dass die Fokuslage bei Temperaturänderungen zumindest im Wesentlichen die gleiche bleibt.

Dem Lichtempfänger ist bevorzugt eine Blende vorgeordnet, insbesondere in einem der Brennweite der Empfangsoptik entsprechenden Abstand, d.h. die Empfangsoptik fokussiert das Empfangslicht auf die Blendenöffnung. Der kompensierende Temperaturgang des Umlenkelements sorgt dafür, dass diese Fokuslage erhalten bleibt, obwohl sich die Brennweite der Empfangsoptik temperaturbedingt ändert. Dadurch kann der Akzeptanzwinkel beziehungsweise die Blendenöffnung ohne Rücksicht auf Temperaturänderungen beziehungsweise ohne eine Toleranzreserve dafür klein bleiben. Am äußeren Querschnitt des Empfangslichts wird möglichst viel Fremdlicht abgeschnitten, ohne das Nutzlicht zu beeinträchtigen.

Das Umlenkelement ist bevorzugt bei einer Solltemperatur, insbesondere bei Raumtemperatur, flach und weist bei einer Abweichung von der Solltemperatur je nach Vorzeichen der Abweichung eine konvexe oder konkave Krümmung auf. Verändert sich demnach mit der Temperatur die Brennweite der Empfangsoptik, so wird dies durch eine kompensierende Änderung der Brennweite des Umlenkelements ausgeglichen. Je nach Richtung, in der auszugleichen ist, erhält das Umlenkelement eine sammelnde Wirkung und somit positive Brennweite oder eine zerstreuende Wirkung und somit negative Brennweite passender Größe. Der Ruhezustand bei Solltemperatur ist ein flaches Umlenkelement, das die Strahlformungseigenschaften der für diese Situation optimierten Empfangsoptik unverändert lässt, insbesondere deren Brennweite mit Fokuslage bei einer Blendenöffnung vor dem Lichtempfänger. Ein flaches Umlenkelement, beispielsweise in Form eines planen Glasspiegels, kann sehr kostengünstig eine hochwertige optische Auslegung erreichen.

Das Umlenkelement weist bevorzugt über einen für den Sensor spezifizierten Temperaturbereich nur eine konvexe Krümmung oder nur eine konkave Krümmung auf, insbesondere einschließlich des Grenzfalls eines flachen Umlenkelements an einem Rand des Temperaturbereichs. In dieser Alternative verformt sich das Umlenkelement nun nicht zwischen konvex und konkav um eine flache Ausgangsform, sondern bleibt je nach Ausführungsform entweder stets konvex oder stets konkav. Mit veränderter Temperatur verändert sich das Ausmaß der konvexen beziehungsweise konkaven Verformung, das Umlenkelement nimmt unterschiedliche Krümmungsradien an. Der Grenzfall eines flachen Umlenkelements bei der niedrigsten oder höchsten spezifizierten Temperatur kann noch eingeschlossen sein, d.h. die Form variiert dann zwischen flach und konvex beziehungsweise flach und konkav oder umgekehrt.

Das Umlenkelement weist bevorzugt mindestens zwei Materialien mit unterschiedlicher Temperaturausdehnung auf. Besonders bevorzugt sind es genau zwei Materialien. Dies ermöglicht eine passive Auslegung des Umlenkelements, das sich von selbst an die Temperatur anpasst. Es ist dafür keine Steuerung oder Schaltung erforderlich.

Das Umlenkelement weist bevorzugt mindestens zwei Schichten der Materialien auf. Die Schichtdicken und Materialien mit ihren thermischen Ausdehnungskoeffizienten sind freie Parameter der Realisierung des Umlenkelements. Damit lässt sich die Empfindlichkeit gegenüber Temperaturänderungen einstellen, um die gewünschten kompensierenden temperaturabhängigen Strahlformungseigenschaften des Umlenkelements zu erreichen. Ein drittes oder weiteres Material beziehungsweise eine dritte und weitere Schicht betrifft insbesondere den Fall einer zusätzlichen Schutzschicht oder ein Schichtensystem auf einer Trägerschicht oder mehreren Trägerschichten.

Das Umlenkelement weist bevorzugt einen Kern aus dem einen Material auf, der von dem anderen Material umgeben ist, insbesondere einen Metallkern mit umgebendem Kunststoff. Das umgebende Material muss bei Temperaturänderungen dem Kern ausweichen. Der Kern hat vorzugsweise einen geringen thermischen Ausdehnungskoeffizienten, wie im Falle von Metall, und reagiert daher vergleichsweise wenig auf die Temperaturänderung. Die Grundform bleibt damit durch den Kern vorgegeben, es ergibt sich die gewünschte unterschiedliche Krümmung durch das umgebende Material.

Der Kern ist vorzugsweise ringförmig. Das mit der Temperatur veränderliche, umgebende Material nimmt dann bei Ausdehnung und Zusammenziehen eine um die Mittenachse symmetrische Form an. Es ergibt sich eine Krümmungsänderung über die ganze Fläche mit über den Umfang hinweg vergleichbarer radialer Form. Das entspricht gerade der gewünschten Brennweitenänderung.

Dem Umlenkelement ist bevorzugt ein Aktorelement zu dessen Verformung zugeordnet, und das Aktorelement wird zum Einstellen temperaturabhängiger Strahlformungseigenschaften angesteuert. Dies ist eine aktive Ausführungsform beispielsweise auf Basis einer Piezokeramik. Das Umlenkelement wird von dem Aktorelement in die jeweils zur Temperatur passende Form gebracht.

Der Sensor weist bevorzugt einen Temperaturfühler und/oder ein lichtempfindliches Messelement zu Bestimmung eines Strahlquerschnitts des Empfangslichts auf. Aus der gemessenen Temperatur lassen sich in Kenntnis des Empfangspfades des Sensors die Veränderungen des Empfangsstrahlengangs mit einem theoretischen Modell vorhersagen, mit dem lichtempfindlichen Messelement können sie praktisch nachgemessen werden. Das kann für Diagnosezwecke verwendet werden. Im Zusammenspiel mit einem Aktorelement kann so eine Temperaturregelung für die resultierende Strahlformung von Empfangsoptik und Umlenkelement aufgebaut werden. Das lichtempfindliche Messelement kann beispielsweise ringförmig um eine Blendenöffnung angelegt werden.

Die bewegliche Ablenkeinheit ist bevorzugt als Drehspiegel mit einer Spiegelfläche ausgebildet. Typischerweise steht der Drehspiegel in einem Winkel von 45°, so dass Sendelicht längs der Drehachse erzeugt beziehungsweise Empfangslicht längs der Drehachse empfangen und durch die 90°-Umlenkung mit dem Drehspiegel eine Ebene senkrecht zu der Drehachse abgetastet wird. Die Spiegelfläche ist bevorzugt die einzige Spiegelfläche des Drehspiegels. Es handelt sich dann also um kein Polygonspiegelrad. Es sind alternativ Laserscanner bekannt, in denen sich der gesamte Messkopf mit Lichtsender und Lichtempfänger dreht.

Das Umlenkelement ist bevorzugt mit der Ablenkeinheit mitbewegt angeordnet. Im Falle einer als Drehspiegel ausgebildeten Ablenkeinheit bildet das Umlenkelement vorzugsweise in Doppelfunktion zugleich die Spiegelfläche des Drehspiegels. Die Temperaturkompensation wird folglich durch besondere Ausgestaltung des Drehspiegels erreicht.

Das Umlenkelement ist bevorzugt als der Empfangsoptik in dem Empfangsstrahlengang des Empfangslichts nachgeordneter Faltspiegel ausgebildet. In dieser Ausführungsfunktion ist das Umlenkelement kein Teil der Ablenkeinheit und insbesondere ein separates Bauteil zu einem Drehspiegel und diesem nachgeordnet. Mit dem Faltspiegel wird der Empfangsstrahlengang gefaltet, ihm eine neue Richtung gegeben und der Empfangsstrahlengang insbesondere wenigstens teilweise in sich selbst zurückgeführt. Dadurch können längere Lichtwege auf kleinerem Raum untergebracht werden. Der Faltspiegel ist besonders bevorzugt der Empfangsoptik nachgeordnet. Somit trifft auf den Faltspiegel Empfangslicht, dass bereits von der Empfangsoptik strahlgeformt oder fokussiert ist und das dann von dem Faltspiegel zu dem Lichtempfänger umgelenkt wird. Durch die Doppelfunktion des Faltspiegels als das erfindungsgemäße Umlenkelement wird der Faltung eine Temperaturkompensation der Strahlformung überlagert.

Eine spiegelnde Fläche des Faltspiegels ist bevorzugt an den Empfangsstrahlengang angepasst, insbesondere ringförmig mit einem nicht spiegelnden Zentrum und einem Ringsegment entsprechend einem Schattenwurf in dem Empfangsstrahlengang. Das verringert den Fremdlichteintrag und verbessert damit das Signal-Rausch-Verhältnis. Durch die Anpassung spiegelt der Faltspiegel kein zusätzliches Fremdlicht aus Bereichen in den Lichtempfänger, in denen kein Nutzlicht auftrifft. Eine Ringform eignet sich, wenn der Lichtempfänger in einem Zentrum des Empfangsstrahlengangs sitzt. Dort ist dann einfallendes Empfangslicht abgeschattet, so dass zentral gespiegeltes Licht nur Fremdlicht sein kann. Ein entsprechender Schattenwurf kann durch den Lichtsender und ein Trägerelement für Lichtempfänger und/oder Lichtempfänger entstehen und in der Formgebung der spiegelnden Fläche berücksichtigt werden.

Der Faltspiegel ist bevorzugt derart ausgebildet und angeordnet, dass das Empfangslicht direkt in Richtung des Lichtempfängers gelenkt wird. Dies bedeutet, dass es nur einen einzigen Faltspiegel gibt und es nicht mehrerer Faltspiegel und damit Umlenkungen hintereinander bedarf, ehe das Empfangslicht in die neue Richtung zu dem Lichtempfänger geleitet ist. Das Empfangslicht aus dem Überwachungsbereich wird somit einmal von der Ablenkeinheit durch die Empfangsoptik zu dem Faltspiegel und dann von dem Faltspiegel zu dem Lichtempfänger gelenkt, weitere Richtungsänderungen des Empfangsstrahlengangs sind nicht vorgesehen. Zwischen Faltspiegel und Lichtempfänger sind noch optische Elemente wie Filter oder Blenden möglich, nicht aber neue Umlenkelemente oder Spiegel.

Der Faltspiegel ist bevorzugt senkrecht zu dem darauf auftreffenden Strahlengang des Empfangslichts orientiert. Dabei stehen vorzugsweise eine Linsenebene einer als Empfangslinse ausgebildeten Empfangsoptik und der Faltspiegel zueinander parallel, noch bevorzugter auch die Empfängerebene des Lichtempfängers. Das auf den Faltspiegel auftreffende Empfangslicht wird somit zurückgeworfen oder, abgesehen von Toleranzen und dergleichen, um 180° umgelenkt. Durch einen Bündelungseffekt der Empfangsoptik ist nicht der Reflexionswinkel der einzelnen Strahlen des Empfangslichts 180°, es lässt sich aber eine gemeinsame Richtung des gesamten Strahlenbündels des Empfangslichts angeben, auf die das zutrifft, beispielsweise ein mittlerer Reflexionswinkel, oder man definiert es nochmals alternativ vorzugsweise über die Empfangsoptik, deren optische Achse senkrecht zu dem Faltspiegel steht. Der Lichtempfänger ist bevorzugt zwischen Ablenkeinheit und Faltspiegel angeordnet. Weder die Umlenkung des Faltspiegels noch weiterer Umlenkelemente führen dann das Empfangslicht für den Lichtempfänger in eine Ebene jenseits des Faltspiegels.

Der Sensor weist bevorzugt einen mindestens teilweise mit der Ablenkeinheit mitbewegten Sendetubus zur Abschirmung des Sendelichts auf. Der Sendetubus umgibt gleichsam den Sendestrahlengang und verhindert, dass aus dem Sendelicht vor dem Austritt in den Überwachungsbereich Streulicht innerhalb des Sensors entsteht. Vorzugsweise ist in dem Sendetubus eine Sendeoptik des Lichtsenders zur Strahlformung, insbesondere Kollimierung des Sendelichts angeordnet.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Laserscanners;
- Fig. 2: eine schematische Darstellung eines Laserscanners mit Faltspiegel;
- Fig. 3: eine Darstellung des Empfangsstrahlengangs in dem Laserscanner gemäß Figur 2 nach einer Empfangsoptik;
- Fig. 4: eine Ausschnittdarstellung des Empfangsstrahlengangs gemäß Figur 3 bei Brennweitenänderung der Empfangsoptik durch unterschiedliche Temperaturen;
- Fig. 5: eine schematische Darstellung unterschiedlicher Formgebungen eines Umlenkelements bei unterschiedlichen Temperaturen;
- Fig. 6: eine dreidimensionale Darstellung eines Umlenkelements in einem flachen Zustand,
- Fig. 7: eine dreidimensionale Darstellung eines Umlenkelements in einem konkav gekrümmten Zustand; und
- Fig. 8: eine Darstellung verschiedener Krümmungen eines Umlenkelements bei verschiedenen Temperaturen.

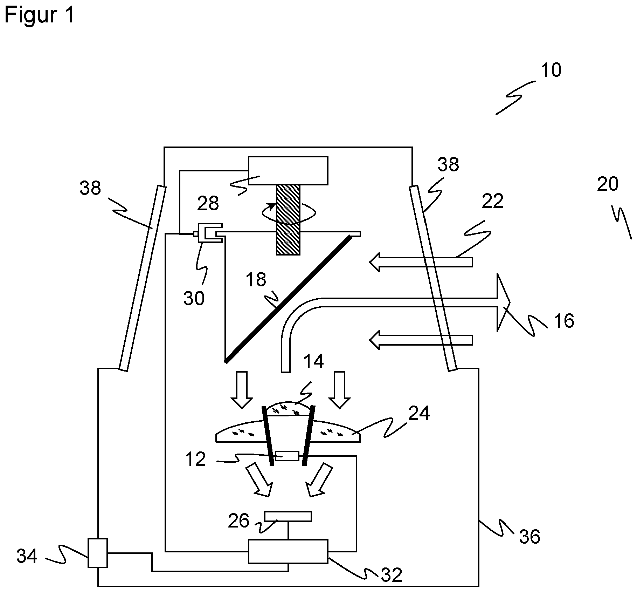

Figur 1 zeigt eine schematische Schnittdarstellung durch einen optoelektronischen Sensor in einer Ausführungsform als Laserscanner 10. Ein Lichtsender 12, beispielsweise mit einer Laserlichtquelle, erzeugt mit Hilfe einer Sendeoptik 14 einen Sendelichtstrahl 16. Der Sendelichtstrahl 16 wird mittels einer Ablenkeinheit 18 in einen Überwachungsbereich 20 ausgesandt. Zur Vermeidung optischen Übersprechens kann der Sendelichtstrahl 16 zumindest teilweise von einem nicht gezeigten Sendetubus umgeben sein.

Im Überwachungsbereich 20 wird der Sendelichtstrahl 16 von einem gegebenenfalls vorhandenen Objekt remittiert. Das entsprechende Empfangslicht 22 gelangt wieder zu dem Laserscanner 10 zurück und wird über die Ablenkeinheit 18 mittels einer Empfangsoptik 24 von einem Lichtempfänger 26 detektiert. Die Empfangsoptik 24 ist vorzugsweise eine einzelne Sammellinse, es können aber weitere Linsen und sonstige optische Elemente hinzukommen. Der Lichtempfänger 26 weist beispielsweise mindestens eine Photodiode oder für höhere Empfindlichkeit eine Lawinenphotodiode (APD) beziehungsweise eine Anordnung mit mindestens einer Einzelphotonlawinendiode (SPAD, SiPM) auf.

Die Ablenkeinheit 18 wird von einem Motor 28 in eine kontinuierliche Drehbewegung mit einer Scanfrequenz versetzt. Dadurch tastet der Sendelichtstrahl 16 während jeder Scanperiode, also einer vollständigen Umdrehung bei der Scanfrequenz, eine Ebene ab. Am Außenumfang der Ablenkeinheit 18 ist eine Winkelmesseinheit 30 angeordnet, um die jeweilige Winkelstellung der Ablenkeinheit 18 zu erfassen. Die Winkelmesseinheit 30 wird hier beispielhaft von einer Strichscheibe als Winkelmaßverkörperung und einer Gabellichtschranke als Abtastung gebildet.

Eine Steuer- und Auswertungseinheit 32 ist mit dem Lichtsender 12, dem Lichtempfänger 26, dem Motor 28 und der Winkelmesseinheit 30 verbunden. Durch Bestimmen der Lichtlaufzeit zwischen Aussenden des Sendelichtstrahls 16 und Empfang von remittiertem Empfangslicht 22 wird unter Verwendung der Lichtgeschwindigkeit auf die Entfernung eines angetasteten Objektes von dem Laserscanner 10 geschlossen. Die jeweilige Winkelstellung, unter welcher dabei der Sendelichtstrahl 16 ausgesandt wurde, ist der Auswertungseinheit von der Winkelmesseinheit 30 bekannt.

Somit stehen nach jeder Scanperiode über den Winkel und die Entfernung zweidimensionale Polarkoordinaten der Objektpunkte in dem Überwachungsbereich 20 zur Verfügung, und entsprechende Messdaten können über eine Schnittstelle 34 übertragen werden. Die Schnittstelle 34 kann umgekehrt für eine Parametrierung oder sonstigen Datenaustausch zwischen Laserscanner 10 und Außenwelt genutzt werden. Die Schnittstelle 34 kann für die Kommunikation in einem oder mehreren herkömmlichen Protokollen ausgelegt sein, wie IO-Link, Ethernet, Profibus, USB3, Bluetooth, WLAN, LTE, 5G und vielen weiteren. Bei Anwendungen in der Sicherheitstechnik kann die Schnittstelle 34 sicher ausgebildet, insbesondere ein sicherer Ausgang (OSSD, Output Signal Switching Device) für ein sicherheitsgerichtetes Abschaltsignal bei Erkennen einer Schutzfeldverletzung sein. Der Laserscanner 10 ist in einem Gehäuse 36 untergebracht, welches eine umlaufende Frontscheibe 38 aufweist.

Bei dem dargestellten Laserscanner 10 befindet sich der Lichtsender 12 und dessen Sendeoptik 14 in einer zentralen Öffnung der Empfangsoptik 24. Dies ist nur eine beispielhafte Möglichkeit der Anordnung. Die Erfindung umfasst daneben alternative koaxiale Lösungen, etwa mit einem eigenen Spiegelbereich für den Sendelichtstrahl 16 oder mit Teilerspiegeln, und auch biaxiale Anordnungen.

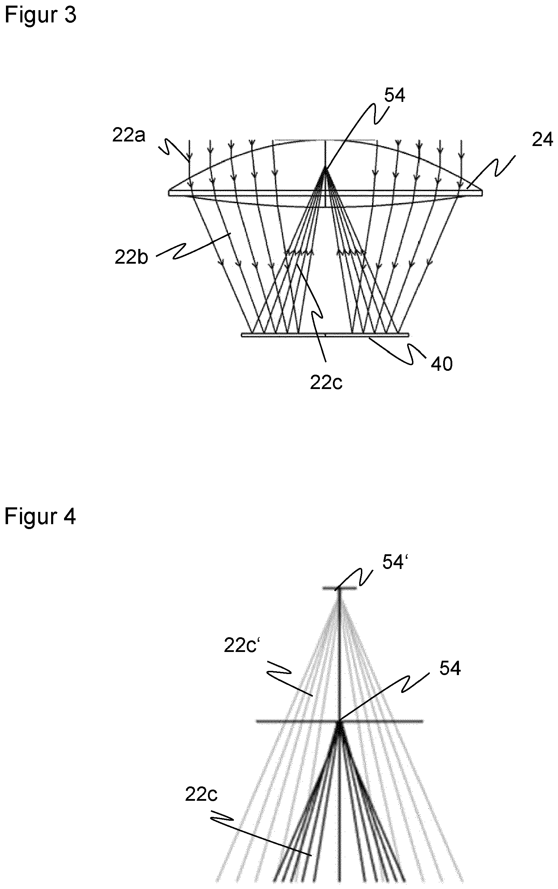

Die Ablenkeinheit 18 erscheint in Figur 1 als flacher Drehspiegel. Erfindungsgemäß ist jedoch der Drehspiegel in Abhängigkeit von der Temperatur unterschiedlich gekrümmt, wobei je nach Ausführungsform bei allen Temperaturen eine Krümmung vorhanden ist oder bei einer bestimmten Temperatur die flache Form eingenommen wird. Der Grund für die temperaturabhängige Verformung, die Ausgestaltung der Verformung sowie mögliche Maßnahmen, um dies zu erreichen, werden später unter Bezugnahme auf die Figuren 3 bis 8 erläutert.

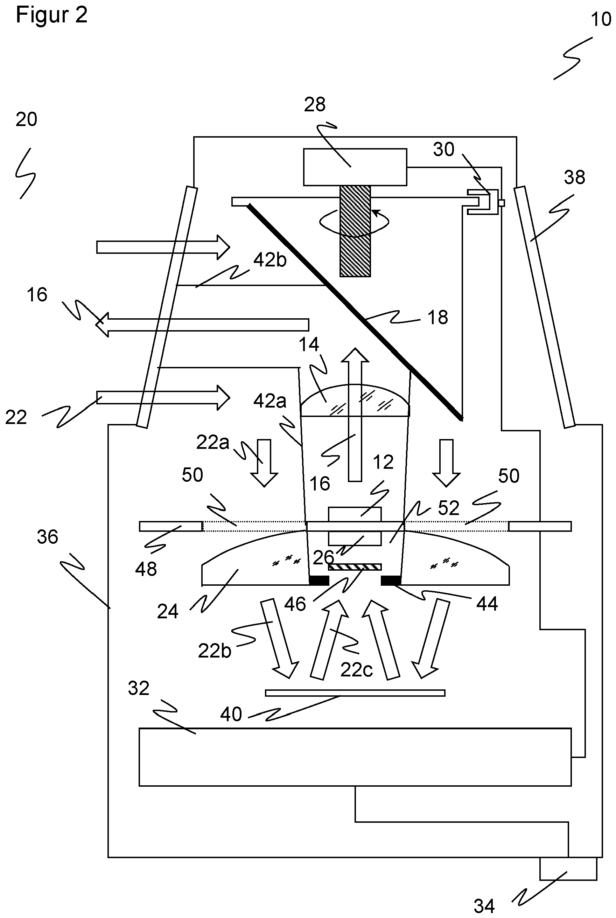

Figur 2 zeigt eine weitere Ausführungsform eines Laserscanners 10, in der statt des Drehspiegels der Ablenkeinheit 18 ein zusätzlicher Faltspiegel 40 je nach Temperatur unterschiedlich gekrümmt wird. Dabei sind gleiche Merkmale mit dem gleichen Bezugszeichen versehen und werden nicht erneut erläutert. Der Sendestrahlengang ist in Figur 2 mit einem zu Figur 1 bereits angesprochenen optionalen ein- oder zweiteiligen Sendetubus 42a-b abgeschirmt. Zumindest der zweite Teil 42b des Sendetubus' von der Ablenkeinheit 18 in den Überwachungsbereich 20 ist mit der Ablenkeinheit 18 mitbewegt.

Im Unterschied zu dem Laserscanner 10 nach Figur 1 wird das Empfangslicht 22 in dem in Figur 2 dargestellten Laserscanner 10 zusätzlich umgelenkt und erhält zur besseren Unterscheidbarkeit in den aufeinanderfolgenden Teilen des Empfangslichtpfads jeweils ein unterschiedliches Bezugszeichen. Das von der Ablenkeinheit 18 umgelenkte Empfangslicht 22a trifft auf die Empfangsoptik 24. Das dort strahlgeformte oder gebündelte Empfangslicht 22b fällt auf den Faltspiegel 40. Das von dem Faltspiegel 40 zurückgeworfene Empfangslicht 22c trifft dann durch eine Blende 44 und nach Passieren eines optischen Filters 46, das auf die Wellenlänge des Lichtsenders 12 abgestimmt ist, auf den Lichtempfänger 26. Die Reihenfolge von Blende 44 und optischem Filter 46 kann umgekehrt werden.

Lichtsender 12 und Lichtempfänger 26 sind in der in Figur 2 dargestellten Ausführungsform auf einer gemeinsamen Leiterkarte 48 angeordnet, die eine Aussparung 50 für den Durchtritt des Empfangslichts 22a aufweist. Alternativ sind jeweils eigene Leiterkarten denkbar. Die Empfangsoptik 24 weist eine zentrale Öffnung 52 auf, in der Blende 44, optisches Filter 46 und der Lichtempfänger 26 untergebracht sind. In alternativen Ausführungsformen kann der Lichtempfänger 26 unterhalb der Empfangsoptik 24 angeordnet sein, die dann nicht notwendig noch eine zentrale Öffnung 52 aufweist. Statt der zentralen Öffnung 52 kann die Empfangsoptik 24 in ihrem Zentrum ein weiteres strahlformendes Element aufweisen. Insbesondere bildet dann die dargestellte Empfangsoptik 24 eine äußere Zone für das Empfangslicht 22a auf dem Hinweg und das weitere strahlformende Element eine innere Zone für das Empfangslicht 22c auf dem Rückweg nach Reflexion an dem Faltspiegel 40.

Der Faltspiegel 40 kann mit spektral filternden Eigenschaften in Anpassung an eine Wellenlänge des Lichtsenders 12 ausgestattet werden, sei es durch Beschichtungen, Strukturierungen oder ein Filterelement, und ersetzt oder ergänzt auf diese Weise das optische Filter 46. Das optische Filter 46 hat den Vorteil, dass dort der Querschnitt des Empfangslichts 22c und der Winkelbereich der dort einfallenden Strahlen eng begrenzt ist. Deshalb ist ein kleines optisches Filter 46 mit enger Bandbreite möglich, mit der Fremdlicht außerhalb der Wellenlänge des Sende- oder Nutzlichts besonders kostengünstig und wirkungsvoll ausgefiltert wird.

Ebenso wie in Figur 1 der Drehspiegel der Ablenkeinheit 18 vereinfachend flach dargestellt ist, zeigt Figur 2 vereinfachend einen flachen Faltspiegel 40. Im Folgenden wird nun eine erfindungsgemäße temperaturabhängige Verformung von Drehspiegel beziehungsweise Faltspiegel vorgestellt, mit der ein Temperaturgang im Empfangsstrahlengang kompensiert wird, insbesondere der Empfangsoptik 24. Je nach Temperatur und Ausführungsform nehmen dabei Drehspiegel und/oder Faltspiegel 40 unterschiedliche Formen beziehungsweise Krümmungen ein, wobei wiederum je nach Ausführungsform bei einer bestimmten Temperatur ein flacher Zustand denkbar ist oder eine Krümmung über alle Temperaturen erhalten bleibt. Ferner ist in Ergänzung zu den Ausführungsformen gemäß Figur 1 oder Figur 2 denkbar, dass es weitere Umlenkelemente gibt, die jeweils durch temperaturabhängige Verformung zu der Kompensation beitragen können oder nicht. Anstelle eines Laserscanners 10 mit einer als Drehspiegel ausgestalteten Ablenkeinheit 18 ist ein Laserscanner mit einem drehenden Messkopf denkbar, in dem Lichtsender und/oder Lichtempfänger sowie mindestens ein sich temperaturabhängig verformendes Umlenkelement im Empfangsstrahlengang mitbewegt sind.

Figur 3 zeigt erneut den gefalteten Empfangsstrahlengang 22a-c in dem Laserscanner 10 gemäß Figur 2 vergrößert und detaillierter. Dank des Faltspiegels 40 wird der Bauraum zwischen Empfangsoptik 24 und Faltspiegel 40 doppelt genutzt, so dass der Empfangsstrahlengang auch bei längerer Brennweite der Empfangsoptik 24 untergebracht wird. Das gefaltete Empfangslicht 22c hat durch die längere Brennweite der Empfangsoptik 24 einen geringeren Winkelfächer, der die Auslegung eines optischen Filters 46 mit kleinen Abmessungen und engem Durchlassband erlaubt. In einer Fokuslage 54 kann die Blende 44 angeordnet werden und so wirksam Fremdlicht unterdrücken, das unter flacherem Winkel einfällt.

Figur 4 illustriert in einer Ausschnittvergrößerung des Empfangsstrahlengangs einen Temperatureffekt der Strahlformung beziehungsweise Fokussierung. Die günstige Situation der Figur 3 wird nur bei einer bestimmten Temperatur, beispielsweise Raumtemperatur von 20°C erreicht. Bei einer veränderten Temperatur, beispielsweise einer höheren Temperatur von 70°C, verstellt sich die Brennweite der Empfangsoptik 24. Für das Empfangslicht 22c` bei der geänderten Temperatur resultiert eine verschobene Fokuslage 54' und damit ein vergrößerter Querschnitt des Empfangslichts 22c` in der Blendenebene. Eine in der ursprünglichen Fokuslage 54 angeordnete Blende 44 schneidet dann je nach Auslegung der Blendenöffnung, die Toleranzen zulässt oder nicht, entweder Nutzlicht ab oder lässt zusätzliches Fremdlicht passieren. Dieser Temperatureffekt ist bei einer Empfangsoptik 24 aus Kunststoff, insbesondere einer Kunststofflinse, besonders ausgeprägt. Kunststoff hat aber gegenüber dem weniger temperaturempfindlichen Glas Vorteile in der Herstellung und Gestaltung sowie im Preis.

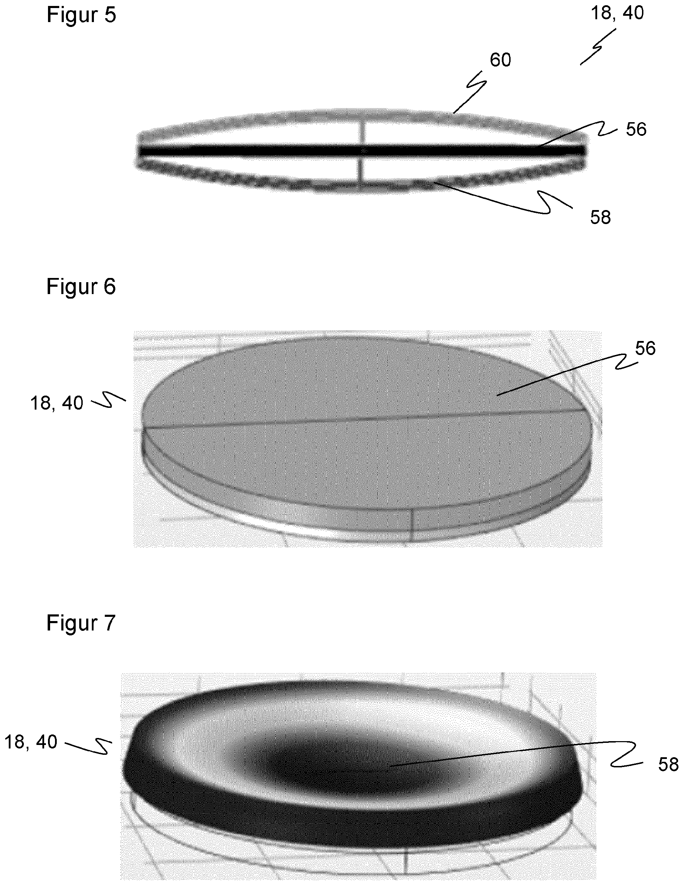

Figur 5 illustriert eine kompensierende temperaturabhängige Verformung des Faltspiegels 40 oder analog des Drehspiegels der Ablenkeinheit 18 in einer Ausführungsform eines Laserscanners 10 nach Figur 1. Der nun übergreifend als Umlenkelement bezeichnete Faltspiegel oder Drehspiegel nimmt als Nennspiegel bei einer Solltemperatur, beispielsweise Raumtemperatur, eine flache Form 56 an. Eine erhöhte Temperatur bewirkt eine zunehmend konkav gekrümmte Form 58, entsprechend eine erniedrigte Temperatur eine zunehmend konvex gekrümmte Form 60. Damit ergibt sich ein temperaturabhängiger Brennweitenverlauf des Umlenkelements, der demjenigen der Empfangsoptik 24 entgegengesetzt ist, und zwar nach Möglichkeit auch quantitativ in einem gleichen Maße. Die resultierende Brennweite im Empfangsstrahlengang ist dadurch im Idealfall konstant und schwankt jedenfalls aufgrund der kompensierenden Verformung des Umlenkelements deutlich weniger.

Eine Verformung beziehungsweise Änderung des Krümmungsradius des Umlenkelements über Temperatur lässt sich durch eine geschickte Paarung unterschiedlicher Materialien erreichen. Vorzugsweise wird ein Schichtaufbau von mindestens zwei Materialien gewählt. Die Grundidee ähnelt einem Bimetallstreifen, wobei aber eine deutlich präzisere Verformung erreicht wird und vorzugsweise nicht nur Metalle, sondern beispielsweise die Kombination aus einem Metall und einem Kunststoff oder eine sonstige Materialkombination aus Kunststoffen und/oder Metallen eingesetzt ist. Die Schichten sind in ihren Dicken und Materialien mit jeweiligen thermischen Ausdehnungskoeffizienten gerade so ausgelegt, dass ganz gezielt eine dem Temperaturverhalten der Empfangsoptik 24 entgegenwirkende Verformung des Umlenkelements erreicht wird. Dabei wird ein spezifizierter Temperaturbereich um die Raumtemperatur von 20° herum berücksichtigt, beispielsweise über ein Temperaturintervall von insgesamt 100°C, der einem zulässigen Arbeitsumfeld des Laserscanners 10 entspricht.

Die Figuren 6 und 7 zeigen ergänzend zu der schematischen Darstellung der Figur 5 eine Ausführungsform des Umlenkelements mit einer verspiegelten obersten Schicht in einer dreidimensionalen Darstellung. Dabei zeigt Figur 6 die flache Form 56, d.h. eine nicht verformte Spiegeloberfläche bei Umgebungstemperatur, und Figur 7 eine bespielhafte Verformung zu einer konkav gekrümmten Form 58 bei 50°C Übertemperatur.

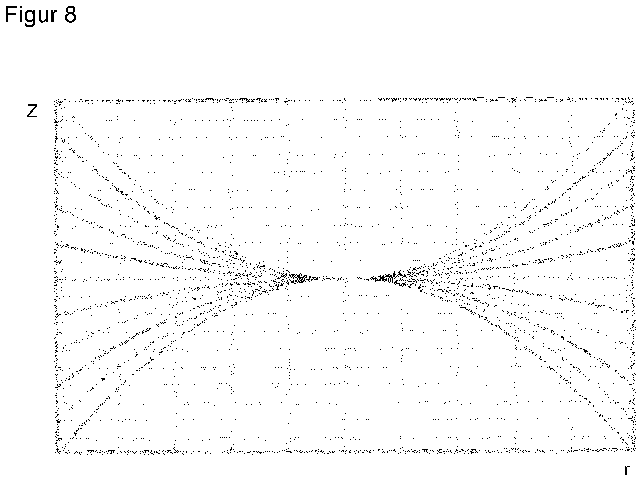

Figur 8 zeigt einen beispielhaften Temperaturgang des Umlenkelements. Aufgetragen ist die effektive Dicke oder Ausdehnung in Z-Richtung senkrecht zu der Spiegelfläche gegen den Radius r des Umlenkelements. Dabei ist eine Kreisform des Umlenkelements nur vereinfachend angenommen, in der Praxis kann das Umlenkelement auch eine andere Geometrie aufweisen. Jede Kurve steht für die Krümmung bei einer bestimmten Temperatur, von oben nach unten bei einer Maximaltemperatur mit größter konkaver Krümmung über weniger ausgeprägte konkave Krümmung zu einer flachen Form bei Raumtemperatur mit zunehmender konvexer Krümmung bis hin zu einer maximalen konvexen Krümmung bei Minimaltemperatur. Für eine beispielhafte Paarung von Corning Glas 9740 mit 1mm und Aluminium mit 0.5mm Dicke sind Veränderungen im Krümmungsradius bis +/-1m erreichbar.

In den gezeigten Ausführungsformen nimmt das Umlenkelement bei Raumtemperatur eine flache Form an, und der Temperaturgang mit konvexer und konkaver Verformung ist sozusagen darum zentriert. In anderen Ausführungsformen wird die flache Form bei einer höheren oder geringeren Temperatur eingenommen, bis hin zu dem Randfall einer flachen Form bei Maximaltemperatur oder Minimaltemperatur. Die Form variiert dann zwischen leicht konvex und stark konkav oder leicht konkav und stark konvex, oder zwischen flach und konvex beziehungsweise flach und konkav. In nochmals anderen Ausführungsformen ist das Umlenkelement jedenfalls im spezifizierten Temperaturbereich gar nicht mehr flach, d.h. der Temperaturgang variiert von leicht konvex zu stark konvex beziehungsweise leicht konkav zu stark konkav. Die Richtung der Krümmungsänderung in Abhängigkeit von der Temperatur ist durch die gewünschte kompensierende Wirkung entgegengesetzt zur Brennweitenänderung der Empfangsoptik 24 vorgegeben.

Alternativ zu einem Umlenkelement aus zwei Schichten ist denkbar, einen Kern aus mindestens einem Material mit mindestens einem anderen Material zu umgeben. Ein Beispiel dafür ist ein Ring aus Metall, der von Kunststoff umgeben ist. Bei einem größeren Ausdehnungskoeffizienten des Kunststoffes gegenüber dem Metall entweicht der Kunststoffkorpus seitlich bei steigender Temperatur. Für niedrige Temperaturen wird das Umlenkelement so dimensioniert, dass die gewünschte entgegengerichtete Krümmung entsteht, indem beispielsweise eine vordefinierte Krümmung auf der unwirksamen Seite des Spiegels eingebracht wird.

Eine nochmals alternative Ausführungsform verwendet eine Aktorik, ersetzt beispielsweise die passive nicht-spiegelnde Schicht des Umlenkelements durch eine aktiv steuerbare Piezokeramik. Darüber kann der Krümmungsradius des Schichtverbunds gesteuert werden. Beispielsweise wird die Form des Umlenkelements anhand einer mit einem Temperaturfühler bestimmten Temperatur gesteuert oder geregelt. Weiterhin ist denkbar, zur Bestimmung der passenden Ansteuerung den Strahlquerschnitt des Empfangslichts 22c zu messen, etwa mit einer Photodiode am Rand der Blendenöffnung.

## Patentansprüche

1. Optoelektronischer Sensor (10), insbesondere Laserscanner, zur Erfassung von Objekten in einem Überwachungsbereich (20), wobei der Sensor (10) einen Lichtsender (12) zum Aussenden von Sendelicht (16), einen Lichtempfänger (26) zum Erzeugen eines Empfangssignals aus Empfangslicht (22) aus dem Überwachungsbereich (20), eine Empfangsoptik (24) zum Bündeln des Empfangslichts (22) auf den Lichtempfänger (26), eine bewegliche Ablenkeinheit (18) zur periodischen Ablenkung des Sendelichts (16) und des Empfangslichts (22), eine Steuer- und Auswertungseinheit (32) zur Erfassung von Informationen über Objekte in dem Überwachungsbereich (20) anhand des Empfangssignals, insbesondere zur Abstandsmessung mit einem Lichtlaufzeitverfahren, sowie ein optisches Umlenkelement (18, 40), insbesondere ein Spiegelelement, im Strahlengang des Empfangslichts (22) aufweist,
**dadurch gekennzeichnet,**
**dass** das Umlenkelement (18, 40) temperaturabhängige Strahlformungseigenschaften aufweist, insbesondere eine temperaturabhängige Krümmung, die einer temperaturabhängigen Veränderung der Strahlformungseigenschaften der Empfangsoptik (24) kompensatorisch entgegenwirken.

2. Sensor (10) nach Anspruch 1,
wobei die Empfangsoptik (24)eine Empfangslinse aufweist, insbesondere nur eine einzige Empfangslinse.

3. Sensor (10) nach Anspruch 1 oder 2,
wobei das Umlenkelement (18, 40) und die Empfangsoptik (24) unter Temperaturveränderung eine zueinander entgegengesetzte Brennweitenänderung erfahren.

4. Sensor (10) nach einem der vorhergehenden Ansprüche,
wobei dem Lichtempfänger (26) eine Blende (44) vorgeordnet ist, insbesondere in einem der Brennweite der Empfangsoptik (24) entsprechenden Abstand.

5. Sensor (10) nach einem der vorhergehenden Ansprüche,
wobei das Umlenkelement (18, 40) bei einer Solltemperatur, insbesondere bei Raumtemperatur, flach ist und bei einer Abweichung von der Solltemperatur je nach Vorzeichen der Abweichung eine konvexe oder konkave Krümmung aufweist.

6. Sensor (10) nach einem der Ansprüche 1 bis 4,
wobei das Umlenkelement (18, 40) über einen für den Sensor (10) spezifizierten Temperaturbereich nur eine konvexe Krümmung oder nur eine konkave Krümmung aufweist, insbesondere einschließlich des Grenzfalls eines flachen Umlenkelements (18, 40) an einem Rand des Temperaturbereichs.

7. Sensor (10) nach einem der vorhergehenden Ansprüche,
wobei das Umlenkelement (18, 40) mindestens zwei Materialien mit unterschiedlicher Temperaturausdehnung aufweist.

8. Sensor (10) nach Anspruch 7,
wobei das Umlenkelement (18, 40) mindestens zwei Schichten der Materialien aufweist.

9. Sensor (10) nach Anspruch 7 oder 8,
wobei das Umlenkelement (18, 40) einen Kern aus dem einen Material aufweist, der von dem anderen Material umgeben ist, insbesondere einen Metallkern mit umgebendem Kunststoff.

10. Sensor (10) nach Anspruch 9,
wobei der Kern ringförmig ist.

11. Sensor (10) nach einem der Ansprüche 1 bis 6,
wobei dem Umlenkelement (18, 40) ein Aktorelement zu dessen Verformung zugeordnet ist und das Aktorelement zum Einstellen temperaturabhängiger Strahlformungseigenschaften angesteuert wird.

12. Sensor (10) nach einem der vorhergehenden Ansprüche,
der einen Temperaturfühler und/oder ein lichtempfindliches Messelement zu Bestimmung eines Strahlquerschnitts des Empfangslichts (22) aufweist.

13. Sensor (10) nach einem der vorhergehenden Ansprüche,
wobei das Umlenkelement (18) mit der Ablenkeinheit (18) mitbewegt angeordnet ist, insbesondere als Drehspiegel die Ablenkeinheit (18) bildet.

14. Sensor (10) nach einem der Ansprüche 1 bis 12,
wobei das Umlenkelement (40) als der Empfangsoptik (24) in dem Empfangsstrahlengang des Empfangslichts (22) nachgeordneter Faltspiegel (40) ausgebildet ist.

15. Verfahren zur Erfassung von Objekten in einem Überwachungsbereich (20), bei dem Sendelicht (16) ausgesandt, nach Remission an dem Objekt von einer Empfangsoptik (24) auf einen Lichtempfänger (26) gebündelt und als Empfangslicht (22) wieder empfangen und von dem Lichtempfänger (26) in ein Empfangssignal gewandelt wird, um aus dem Empfangssignal eine Objektinformation zu erzeugen, insbesondere zur Abstandsmessung mit einem Lichtlaufzeitverfahren, wobei Sendelicht (16) und Empfangslicht (22) mit Hilfe einer beweglichen Ablenkeinheit (18) periodisch abgelenkt werden und das Empfangslicht (22) mit einem Umlenkelement (18, 40), insbesondere einem Spiegelelement, umgelenkt wird,
**dadurch gekennzeichnet,**
**dass** sich Strahlformungseigenschaften des Umlenkelements (18, 40), insbesondere dessen Krümmung, mit der Temperatur derart verändern, dass einer temperaturabhängigen Veränderung der Strahlformungseigenschaften der Empfangsoptik (24) kompensatorisch entgegengewirkt wird.

## Claims

1. An optoelectronic sensor (10), in particular laser scanner, for detecting objects in a monitored area (20), the sensor (10) comprising a light transmitter (12) for transmitting transmitted light (16), a light receiver (26) for generating a received signal from received light (22) from the monitored area (20), receiving optics (24) for focusing the received light (22) onto the light receiver (26), a movable deflection unit (18) for periodically deflecting the transmitted light (16) and the received light (22), a control and evaluation unit (32) for detecting information about objects in the monitored area (20) on the basis of the received signal, in particular for distance measurement using a light time-of-flight method, and an optical deflection element (18, 40), in particular a mirror element, in the beam path of the received light (22),
**characterized in that** the deflection element (18, 40) has temperature-dependent beam shaping properties, in particular a temperature-dependent curvature, that counteract a temperature-dependent change in the beam shaping properties of the receiving optics (24) in a compensatory manner.

2. The sensor (10) according to claim 1,
wherein the receiving optics (24) comprises a receiving lens, in particular only a single receiving lens.

3. The sensor (10) according to claim 1 or 2,
wherein the deflecting element (18, 40) and the receiving optics (24) undergo a mutually opposite focal length change under temperature change.

4. The sensor (10) according to any of the preceding claims,
wherein a diaphragm (44) is arranged in front of the light receiver (26), in particular at a distance corresponding to the focal length of the receiving optics (24).

5. The sensor (10) according to any of the preceding claims,
wherein the deflection element (18, 40) is flat at a set temperature, in particular at room temperature, and has a convex or concave curvature in the event of a deviation from the set temperature, depending on the sign of the deviation.

6. The sensor (10) according to any of claims 1 to 4,
wherein the deflection element (18, 40) has only a convex curvature or only a concave curvature over a temperature range specified for the sensor (10), in particular including the limiting case of a flat deflection element (18, 40) at an edge of the temperature range.

7. The sensor (10) according to any of the preceding claims,
wherein the deflecting element (18, 40) comprises at least two materials with different temperature expansion.

8. The sensor (10) according to claim 7,
wherein the deflector element (18, 40) comprises at least two layers of the materials.

9. The sensor (10) according to claim 7 or 8,
wherein the deflecting element (18, 40) comprises a core of one material surrounded by the other material, in particular a metal core with surrounding plastic.

10. The sensor (10) according to claim 9,
wherein the core is annular.

11. The sensor (10) according to any of claims 1 to 6,
wherein an actuator element is associated with the deflector element (18, 40) for deformation thereof and the actuator element is controlled for setting temperature-dependent beam shaping properties.

12. The sensor (10) according to any of the preceding claims,
comprising a temperature sensor and/or a light-sensitive measuring element for determining a beam cross-section of the received light (22).

13. The sensor (10) according to any of the preceding claims,
wherein the deflecting element (40) is arranged to move with the deflecting unit (18), in particular forms the deflecting unit (18) as a rotating mirror.

14. The sensor (10) according to any of claims 1 to 12,
wherein the deflecting element (40) is formed as a folding mirror (40) arranged downstream of the receiving optics (24) in the receiving beam path of the received light (22).

15. A method for detecting objects in a monitored area (20), wherein transmitted light (16) is transmitted, is focused by a receiving optical system (24) onto a light receiver (26) after remission at the object, is received again as received light (22) and is converted into a received signal by the light receiver (26), in order to generate object information from the received signal, in particular for distance measurement using a light time-of-flight method, transmitted light (16) and received light (22) being periodically deflected with the aid of a movable deflection unit (18), and the received light (22) being deflected with a deflection element (18, 40), in particular a mirror element,
**characterized in that** beam shaping properties of the deflection element (18, 40), in particular its curvature, change with the temperature in such a way that a temperature-dependent change in the beam shaping properties of the receiving optics (24) is counteracted in a compensatory manner.

## Revendications

1. Capteur optoélectronique (10), en particulier scanner laser, pour détecter des objets dans une zone de surveillance (20), le capteur (10) comprenant un émetteur de lumière (12) pour émettre la lumière transmise (16), un récepteur de lumière (26) pour générer un signal reçu à partir de la lumière reçue (22) de la zone de surveillance (20), une optique de réception (24) pour focaliser la lumière reçue (22) sur le récepteur de lumière (26), une unité de déviation mobile (18) pour dévier périodiquement la lumière transmise (16) et la lumière reçue (22), une unité de commande et d'évaluation (32) pour détecter des informations sur des objets dans la zone de surveillance (20) sur la base du signal reçu, en particulier pour mesurer la distance en utilisant une méthode de temps de vol de la lumière, ainsi qu'un élément de déviation optique (18, 40), en particulier un élément de miroir, dans le trajet du faisceau de la lumière reçue (22), **caractérisé en ce que** l'élément de déviation (18, 40) comprend des propriétés de formation de faisceau dépendant de la température, en particulier une courbure dépendant de la température, qui s'opposent de manière compensatoire à une modification dépendante de la température des propriétés de formation de faisceau de l'optique de réception (24).

2. Capteur (10) selon la revendication 1,
dans lequel l'optique de réception (24) comprend une lentille de réception, en particulier une seule lentille de réception.

3. Capteur (10) selon la revendication 1 ou 2,
dans lequel l'élément de déviation (18, 40) et l'optique de réception (24) subissent une modification de distance focale mutuellement opposé en cas d'une modification de température.

4. Capteur (10) selon l'une des revendications précédentes,
dans lequel un diaphragme (44) est disposé devant le récepteur de lumière (26), en particulier à une distance correspondant à la distance focale de l'optique de réception (24).

5. Capteur (10) selon l'une des revendications précédentes,
dans lequel l'élément de déviation (18, 40) est plat à une température de consigne, en particulier à température ambiante, et comprend une courbure convexe ou concave en cas d'écart par rapport à la température de consigne, selon le signe de l'écart.

6. Capteur (10) selon l'une des revendications 1 à 4,
dans lequel l'élément de déviation (18, 40) ne comprend qu'une courbure convexe ou qu'une courbure concave sur une zone de température spécifiée pour le capteur (10), en particulier dans le cas limite d'un élément de déviation plat (18, 40) à un bord de la zone de température.

7. Capteur (10) selon l'une des revendications précédentes,
dans lequel l'élément de déviation (18, 40) comprend au moins deux matériaux ayant une dilatation thermique différente.

8. Capteur (10) selon la revendication 7,
dans lequel l'élément de déviation (18, 40) comprend au moins deux couches de matériaux.

9. Capteur (10) selon la revendication 7 ou 8,
dans lequel l'élément de déviation (18, 40) comprend un noyau d'un matériau entouré par l'autre matériau, en particulier un noyau métallique entouré de plastique.

10. Capteur (10) selon la revendication 9,
dans lequel le noyau est annulaire.

11. Capteur (10) selon l'une des revendications 1 à 6,
dans lequel un élément d'actionnement est associé à l'élément de déviation (18, 40) pour le déformer et l'élément d'actionnement est commandé pour régler des propriétés de formation de faisceau dépendante de la température.

12. Capteur (10) selon l'une des revendications précédentes,
comprenant un capteur de température et/ou un élément de mesure photosensible pour déterminer une section transversale du faisceau de la lumière reçue (22).

13. Capteur (10) selon l'une des revendications précédentes,
dans lequel l'élément de déviation (40) est disposé de manière à se déplacer avec l'unité de déviation (18), en particulier pour former l'unité de déviation (18) en tant que miroir rotatif.

14. Capteur (10) selon l'une des revendications 1 à 12,
dans lequel l'élément de déviation (40) est réalisé comme un miroir pliant (40) disposé en aval de l'optique de réception (24) dans le trajet de faisceau de réception de la lumière reçue (22).

15. Procédé de détection d'objets dans une zone de surveillance (20), dans lequel la lumière transmise (16) est émise, focalisée après rémission sur l'objet par une optique de réception (24) sur un récepteur de lumière (26) et à nouveau reçue comme lumière reçue (22) et convertie en un signal reçu par le récepteur de lumière (26), afin de détecter une information sur l'objet à partir du signal reçu, en particulier pour mesurer la distance en utilisant une méthode de temps de vol de la lumière, dans lequel la lumière transmise (16) et la lumière reçue (22) sont périodiquement déviées à l'aide d'une unité de déviation mobile (18), et la lumière reçue (22) est déviée à l'aide d'un élément de déviation (18, 40), en particulier un élément de miroir,
**caractérisé en ce que** les propriétés de formation de faisceau de l'élément de déviation (18, 40), en particulier sa courbure, se modifient avec la température de telle sorte qu'une modification dépendante de la température des propriétés de formation de faisceau de l'optique de réception (24) est opposée de manière compensatoire.
